# EUROPÄISCHE PATENTSCHRIFT

(11) **EP 2 038 164 B1**
(45) Veröffentlichungstag und Bekanntmachung des Hinweises auf die Patenterteilung: **12.05.2010**
(21) Anmeldenummer: 07786881.8
(22) Anmeldetag: 28.06.2007
(51) Int. Cl.: B62D 25/14, B62D 65/02

(54) **ABSTÜTZELEMENT FÜR EINEN COCKPITTRÄGER**
SUPPORT ELEMENT FOR A COCKPIT BEAM
ÉLÉMENT D'APPUI POUR UN SUPPORT DE COCKPIT

(30) Priorität: 28.06.2006 DE 102006030131; 03.11.2006 DE 102006052281
(43) Veröffentlichungstag der Anmeldung: 25.03.2009
(73) Patentinhaber: Johnson Controls GmbH, 50399 Burscheid (DE)
(72) Erfinder: ZÖRNACK, Markus, 44369 Dortmund (DE); HIRT, Mark, 44791 Bochum (DE); SEYFRIED, Peter, 44145 Dortmund (DE); DORNSCHEIDT, Christian, 40629 Düsseldorf (DE); HEIN, Matthias, 45888 Gelsenkirchen (DE); HINZ, Martin, 47661 Issum (DE); ANGENHEISTER, Paul, 47918 Tönisvorst (DE); BEER, Thomas, 47929 Grefrath (DE); MAI, Alfred, 42499 Hückeswagen (DE); KIERSPEL, Klaus, 51503 Rösrath (DE); SILVA, Norberto, 45327 Essen (DE); ZIMMERMANN, Jochen, 42399 Wuppertal (DE); ARBANAS, Viktor, 5400 Baden (CH); MAAG, Michael, 9470 Buchs (CH); MANNECK, Carsten, 6800 Feldkirch (AT); OERTLE, Max, 9493 Mauren (LI)
(74) Vertreter: Cohausz & Florack
(86) Internationale Anmeldenummer: PCT/EP2007/056479
(87) Internationale Veröffentlichungsnummer: WO 2008/000791

(56) Entgegenhaltungen:
- EP-A- 1 529 720
- DE-A1- 10 152 242
- DE-A1- 19 715 069
- US-B1- 7 048 325

## Beschreibung

Die Erfindung betrifft eine Cockpitstruktur eines Kraftfahrzeuges umfassend mindestens einen Cockpitträger, welche im Bereich zwischen den A-Säulen der Karosserie eines Kraftfahrzeuges vorgesehen und modular aufgebaut ist und welche unter Verwendung unterschiedlicher Cockpitstrukturteile an die jeweilige Karosserie anpassbar ist.

Eine gattungsgemäße Cockpitstruktur ist aus der DE-A-10 152 242 bekannt. Diese Cockpitstruktur weist mehrere Abstützelemente auf.

Von diesem Stand der Technik ausgehend liegt der vorliegenden Erfindung die Aufgabe zugrunde, eine Cockpitstruktur zur Verfügung zu stellen, welche einerseits im Hinblick auf den Materialverbrauch optimiert ist und kürzere Fertigungszeiten ermöglicht sowie andererseits die Sicherheitserfordernisse im Falle eines Offset- und/oder seitlichen Aufpralls erfüllt.

Gemäß einer ersten Lehre der vorliegenden Erfindung wird die oben aufgezeigte Aufgabe für eine gattungsgemäße Cockpitstruktur durch die Merkmale des Anspruchs 1 gelöst. Die Cockpitstruktur ist modular aufgebaut und unter Verwendung unterschiedlicher Cockpitstrukturteile, insbesondere unterschiedlicher Cockpitträger und/oder Abstützelemente, an die jeweilige Karosserie anpassbar.

Bisherige Cockpitstrukturen weisen in der Regel einen individuell gestalteten von der linken zur rechten A-Säule durchgehende Cockpitträger auf. Ein modularer Aufbau der Cockpitstruktur eines Kraftfahrzeuges war bisher nicht bekannt. Durch die Modularität kann die Cockpitstruktur durch Verwendung unterschiedlicher Cockpitstrukturteile, wie beispielsweise Abstützelement und Cockpitträger, an unterschiedliche Kraftfahrzeugtypen einfach angepasst werden. Ferner ist es möglich beispielsweise den Cockpitträger oder das Abstützelement für unterschiedliche Karosserien einzusetzen, was zu reduzierten Fertigungskosten führt.

Die Cockpitstruktur weist erfindungsgemäß als Cockpitstrukturteile mindestens einen Cockpitträger und genau ein Abstützelement auf, das aus Metall gebildet ist und Verbindungsmittel zur Verbindung des Abstützelementes mit dem Cockpitträger, einem Querträger unterhalb der Windschutzscheibe, insbesondere dem Windlauf und einem Bodenbereich oder Tunnelbereich der Karosserie des Kraftfahrzeuges aufweist, so dass das Abstützelement mit dem Cockpitträger, dem Querträger und dem Boden oder Tunnel der Karosserie des Kraftfahrzeuges über einen Kraft-, Form- und/oder Stoffschluss verbindbar ist.

Es hat sich überraschenderweise gezeigt, dass eine Cockpitstruktur mit einem einzigen, beispielsweise auf der Fahrerseite angeordneten Abstützelement aus Metall, welches vom Boden oder Tunnel der Karosserie zu einem Querträger unterhalb der Windschutzscheibe bzw. zum Windlauf verläuft und mit diesem und dem Cockpitträger sowie dem Bodenbereich der Karosserie verbunden ist, übliche Crashanforderungen erfüllen kann. Die erfindungsgemäße Cockpitstruktur ist nicht nur mit einer Reduktion von Schwingungen an der Lenksäule verbunden, sondern führt ebenfalls zu einer Verbesserung des Crashverhaltens der Lenksäule. Gleichzeitig sinkt der Materialverbrauch für die Aussteifung der Sicherheitszelle im Frontbereich deutlich, da keine zusätzlichen Abstützelemente, beispielsweise Diagonalstreben notwendig sind. Das Abstützelement besteht aus einem Metall, insbesondere aus Stahl oder einer Stahllegierung. Hierdurch wird gewährleistet, dass das Abstützelement die notwendige Festigkeit aufweist, um die üblichen Crashanforderungen erfüllen zu können. Durch die vorgesehenen Verbindungsmittel zur Verbindung des Abstützelementes mit dem Cockpitträger, dem Querträger unterhalb der Windschutzscheibe und dem Bodenbereich der Karosserie ist es darüber hinaus möglich, das Abstützelement erst während der Endmontage des Kraftfahrzeuges mit der Karosserie und/oder dem Cockpitträger kraft-, form- und/oder stoffschlüssig zu verbinden. Als Verbindungsmittel können beispielsweise Flanschbereiche an den Enden des Abstützelementes zur Befestigung des Abstützelementes mit der Karosserie, d.h. beispielsweise dem Querträger oder dem Windlauf bzw. dem Bodenbereich sowie eine seitlich angebrachte Aufnahmeplatte zur Befestigung des Cockpitträgers vorgesehen sein.

Vorzugsweise weisen die Cockpitstrukturteile angepasste Verbindungsmittel auf, welche eine Kombination unterschiedlicher Cockpitstrukturteile zulässt, um die Cockpitstruktur an die jeweilige Karosserie anzupassen. Beispielsweise können angepasste Verbindungsmittel durch einheitliche oder auch identische Verbindungsmittel an den jeweiligen Cockpitstrukturteilen, insbesondere an dem Abstützelement oder dem Cockpitträger, realisiert werden.

Ist die Cockpitstruktur zumindest teilweise aus Metall und/oder Kunststoff aufgebaut, so kann die Cockpitstruktur gleichzeitig im Hinblick auf ihr Gewicht, Kosten und Steifigkeit optimiert werden.

Sowohl die Kosten zur Herstellung einer erfindungsgemäßen Cockpitstruktur als auch das Gewicht können gemäß einer nächsten weitergebildeten Ausführungsform bei sehr guten Eigenschaften bezüglich Steifigkeit und Eigenfrequenz dadurch gesenkt werden, dass nur einseitig, insbesondere fahrerseitig ein Cockpitträger aus Metall, insbesondere Stahl oder einer Stahllegierung, vorgesehen ist. Für die Fahrerseite eines Kraftfahrzeuges bestehen aufgrund der Lenksäulenanbindung üblicherweise höhere Steifigkeitsanforderung, welche über den Cockpitträger aus Metall erfüllt werden. Andere Bestandteile der Cockpitstruktur, beispielsweise die Beifahrerseite, benötigen keine durchgehende Tragstruktur aus Metall und können beispielsweise aus Kunststoff gefertigt sein, um Kosten einzusparen.

Einen vereinfachten Aufbau der modularen Cockpitstruktur, beispielsweise im Hinblick auf die Lenksäulenanbindung, ermöglicht ein im Wesentlichen horizontal angeordneter Cockpitträger.

Weist der Cockpitträger mindestens ein geschlossenes Hohlprofil mit variablem Querschnitt auf, kann durch eine verbesserte Materialausnutzung eine Gewichtsreduktion ermöglicht werden.

Die Cockpitstruktur ist, gemäß einer nächsten weitergebildeten Ausführungsform, in der Endmontage des Kraftfahrzeuges in die Karosserie einbaubar, so dass die Cockpitstruktur den Einbau anderer Komponenten in die Karosserie des Kraftfahrzeuges nicht behindert und insofern die Fertigungszeiten eines Kraftfahrzeuges optimiert werden können.

Gemäß einer weiteren Ausführungsform der erfindungsgemäßen Cockpitstruktur weist das Abstützelement verbunden mit dem Cockpitträger die Form eines Dreibeins auf. Das vom Abstützelement und dem Cockpitträger gebildete Dreibein bewirkt eine Aussteifung der Sicherheitszelle allein durch die Elemente Abstützelement und Cockpitträger in drei Raumrichtungen, so dass besonders wenige Teile zur Aussteifung der Sicherheitszelle eines Kraftfahrzeuges benötigt werden.

Weist das Abstützelement der Cockpitstruktur mindestens ein zumindest teilweise geschlossenes, offenes und/oder gebogenes Profil auf, kann das Abstützelement optimal an die Belastungen im Anwendungsfall angepasst werden. Das Abstützelement ist hinsichtlich Gewicht und Eigenfrequenzen der Cockpitträgerstruktur und beispielsweise der Lenksäulenanbindung optimiert. Die Strukturoptimierung dient der Gewichtsreduzierung bei gleicher technischer Performance. Die verwendeten Profile werden im Hinblick auf deren Eigenfrequenz optimiert, so dass Resonanzen ausreichend gedämpft werden. Geschlossene Profile weisen sehr hohe Steifigkeiten auf und können zudem über einfache Verfahren, beispielsweise durch die Einrolltechnik oder Walzprofiltechnik, hergestellt werden. Noch kostengünstiger und üblicherweise mit etwas geringeren Festigkeitseigenschaften ausgestattet sind offene Profile.

Zur Weiteren Gewichts- und Belastungsoptimierung weist das Abstützelement vorzugsweise einen variablen Querschnitt auf, um bei geringem Gewicht an die Crashbelastungen angepasst zu sein.

Gemäß einer bevorzugten Ausführungsform ist das Abstützelement einteilig vom Querträger unterhalb der Windschutzscheibe, insbesondere vom Windlauf, bis zum Bodenbereich der Karosserie durchgehend ausgeführt, so dass möglichst wenige Teile zur Herstellung der Cockpitstruktur benötigt werden.

Zur einfachen Anbindung des Abstützelementes an den Cockpitträger kann das Abstützelement einen Verbindungsbereich zur Verbindung des Abstützelementes mit dem Cockpitträger über Flansche aufweisen, wobei dieser Verbindungsbereich zumindest parallele Kantenbereiche zur Aufnahme von Flanschen des Cockpitträgers aufweist. Über die Verbindung des Cockpitträgers und des Abstützelementes über Flansche ist zudem eine besonders stabile und einfach herzustellende Verbindung gewährleistet.

Weist das Abstützelement einen Verbindungsbereich zur Verbindung des Abstützelementes mit dem Windlauf und/oder einen anderen Querträger auf, welcher in Form eines Arms im Wesentlichen horizontal von dem Verbindungsbereich zur Verbindung mit dem Cockpitträger ausgehend beginnt und im Bereich der Verbindung an den Querträger oder Windlauf der Karosserie im Wesentlichen senkrecht endet, kann das Crashverhalten der erfindungsgemäßen Cockpitstruktur verbessert werden, da das Abstützelement gleichfalls vertikal verlaufende Kräfte des Querträgers und/oder Windlaufs wirkungsvoll aufnehmen kann.

Eine weitere Verbesserung des Crashverhaltens wird gemäß einer weitergebildeten Ausführungsform dadurch erreicht, dass die Verbindungsbereiche des Abstützelementes zur Verbindung des Abstützelementes mit dem Cockpitträger und dem Windlauf und/oder Querträger über einen Einsatz, welcher an die Kontur als offenes Hohlprofil ausgebildeten Abstützelementes in diesen Bereichen angepasst ist, ausgesteift ist.

Vorzugsweise bildet der Einsatz in eingebautem Zustand im Aufnahme- und Anbindungsbereich des Abstützelementes mit diesem zusammen ein teilweise geschlossenes Hohlprofil, so dass ein hoher Aussteifungsgrad erreicht wird.

Toleranzen, welche beim Einbau der Cockpitstruktur in die Karosserie eines Fahrzeugs auftreten, können gemäß einer nächsten Ausführungsform der erfindungsgemäßen Cockpitstruktur dadurch berücksichtigt werden, dass zur Verbindung des Abstützelementes mit dem Bodenbereich der Karosserie ein in das Abstützelement einlegbares, relativ zum Abstützelement und/oder relativ zum Bodenbereich verschiebbares Anbindungselement vorgesehen ist. Durch das Verschieben besteht insbesondere die Möglichkeit, die Cockpitstruktur nahezu spannungsfrei in die Fahrgastzelle einzubauen.

Vorzugsweise weist das Abstützelement und/oder das in das Abstützelement einlegbare Anbindungselement hierzu Langlöcher auf. Es ist aber auch denkbar, dass im Bodenbereich der Karosserie entsprechende Langlöcher oder ähnliche Maßnahmen zum Toleranzausgleich vorgesehen sind.

Der Aufwand zur Herstellung der Cockpitstruktur kann dadurch reduziert werden, dass das Abstützelement in Längsrichtung des Kraftfahrzeuges gesehen im Wesentlichen vertikal verläuft, da der Fertigungsaufwand für ein entsprechendes Abstützelement verringert wird.

Eine alternative Verbindung des Abstützelementes mit dem Querträger bzw. Windlauf und dem Cockpitträger wird dadurch zur Verfügung gestellt, dass das Abstützelement im Verbindungsbereich mit dem Querträger im Wesentlichen horizontal und/oder im Verbindungsbereich mit dem Bodenbereich der Karosserie im Wesentlichen vertikal verläuft. Auch diese alternative Ausführung des Abstützelementes ergibt die notwendige Verbesserung des Crashverhaltens bei reduzierter Cockpitteileanzahl. Zudem kann durch den im Wesentlichen horizontal verlaufenden Verbindungsbereich mit dem unterhalb der Windschutzscheibe verlaufenden Querträger, insbesondere dem Windlauf, besonders einfach realisiert werden. Der im Wesentlichen vertikal verlaufende Verbindungsbereich des Abstützelementes mit dem Boden oder Tunnel der Karosserie ermöglicht eine einfache und raumsparende Anbindung an den Boden- oder Tunnelbereich der Karosserie des Kraftfahrzeuges.

Die Anbindung des Cockpitträgers an das Abstützelement kann alternativ zwischen den horizontal und vertikal verlaufenden Bereichen des Abstützelements, wobei vorzugsweise der Querträger horizontal verläuft.

Gebogene Profile ermöglichen eine einfache Anbindung an den Querträger unterhalb der Windschutzscheibe oder den Windlauf sowie an den Boden oder Tunnel der Karosserie. Es kann aber auch beispielsweise eine beliebige Kombination aus geschlossenem, offenem und gebogenem Profil verwendet werden, um die Erfordernisse an das Abstützelement im Anwendungsfall zu erfüllen.

Gemäß einer nächsten vorteilhaften Ausgestaltung der Erfindung weist das Abstützelement mindestens ein geschlossenes Hohlprofil mit variablem Querschnitt auf. Hierdurch kann das Abstützelement aus sogenannten "modular Tubes" gefertigt werden, welche optimal an die Belastungen im Anwendungsfall ausgelegt werden können, so dass ein minimales Gewicht bei maximaler Steifigkeit gewährleistet werden kann.

Schließlich wird das erfindungsgemäße Abstützelement dadurch vorteilhaft ausgestaltet, dass das Abstützelement einteilig vom Querträger unterhalb der Windschutzscheibe, insbesondere vom Windlauf, bis zum Boden oder Tunnel der Karosserie durchgehend ausgeführt ist. Mit dem einteiligen Abstützelement können bei minimaler Bauteilanzahl dennoch alle Sicherheitserfordernisse im Hinblick auf die Steifigkeit und Resonanzarmut der Sicherheitszelle eines Kraftfahrzeuges gewährleistet werden. Hieraus resultieren besonders geringe Herstellkosten für das erfindungsgemäße Abstützelement.

Es gibt nun eine Vielzahl von Möglichkeiten, das erfindungsgemäße Abstützelement oder die erfindungsgemäße Cockpitstruktur auszugestalten und weiterzubilden. Hierzu wird verwiesen einerseits auf die dem Patentanspruch 1, andererseits auf die Beschreibung zweier Ausführungsbeispiele in Verbindung mit der Zeichnung. In der Zeichnung zeigt
- Fig. 1: eine dreidimensionale Ansicht des fahrerseitigen Teil eines Ausführungsbeispiels einer erfindungsgemäßen Cockpitstruktur,
- Fig. 2: eine dreidimensionale Ansicht des fahrerseitigen Teil eines zweiten Ausführungsbeispiels einer erfindungsgemäßen Cockpitstruktur und
- Fig. 3: eine dreidimensionale Ansicht des Ausführungsbeispiels aus Fig. 2 von der Beifahrerseite aus.

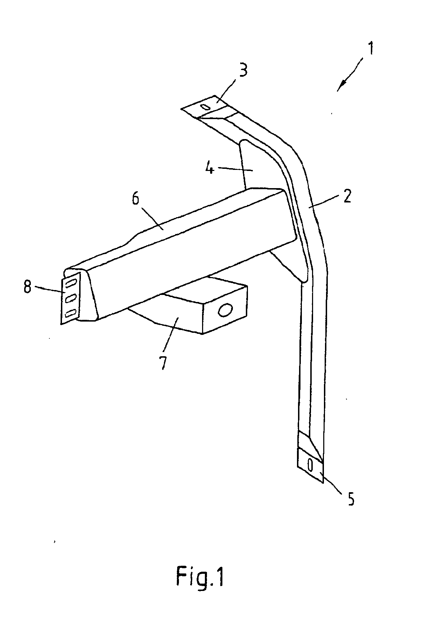

Fig. 1 zeigt ein erstes Ausführungsbeispiel einer erfindungsgemäßen Cockpitstruktur 1, welche aus einem Abstützelement 2 mit Verbindungsmitteln 3, 4 und 5 und einem Cockpitträger 6 aufgebaut ist. Zusätzlich ist in Fig. 1 noch eine Lenksäule 7 montiert am Cockpitträger 6 dargestellt. Die Anbindung des Cockpitträgers 6 an die A-Säule erfolgt über Verbindungsmittel 8.

In dem Ausführungsbeispiel in Fig. 1 ist das Abstützelement 2 als geschlossenes Hohlprofil mit einem etwa quadratischen Querschnitt dargestellt. Der Verbindungsbereich zur Verbindung des Abstützelementes 2 mit einem Querträger bzw. dem Windlauf der Fahrzeugkarosserie weist Verbindungsmittel 3 auf, welche das Abstützelement 2 mit einem nicht dargestellten Querträger, insbesondere dem Windlauf, des Kraftfahrzeuges verbinden, verläuft im Wesentlichen horizontal. Am gegenüberliegenden Ende des Abstützelementes 2 verläuft der Verbindungsbereich des Abstützelementes 2 mit den Verbindungsmitteln 5 zur Verbindung mit dem Boden der Karosserie im Wesentlichen vertikal. Das Abstützelement 2 ist zur Realisierung dieser Form gebogen. Zusätzlich kann am gebogenen Abstützelement eine Halteplatte 4 zur Befestigung des Cockpitträgers 6 montiert werden, um eine Cockpitstruktur mit hoher Steifigkeit und guten Eigenschaften bezüglich Eigenfrequenzen zu erhalten. Durch die seitlich an dem Abstützelement 2 angeordnete Halteplatte 4 kann auf einfache Weise der Cockpitträger 6 mit dem Abstützelement 2 verbunden werden. Die Halteplatte 4 ist vorzugsweise im Bereich des Bogens des Abstützelementes 2 seitlich am Abstützelement 2 angeordnet und kann damit sowohl den vertikalen als auch den horizontalen Teil des Abstützelementes 2 zusätzlich stabilisieren. Ist das Abstützelement 2 einteilig ausgeführt, können Verbindungsmittel zur Verbindung des Abstützelementes 2 mit dem Cockpitträger 6 dadurch zur Verfügung stellen, dass beispielsweise Bohrungen für Schrauben oder Nieten für die Halteplatte 4, welche dann am Cockpitträger 6 angebracht ist, vorgesehen sind oder auch nur eine für das Anschweißen des Cockpitträgers 6 geeignete Oberfläche zur Verfügung gestellt wird.

Das in Fig. 1 dargestellte Abstützelement 2 wird vorzugsweise aus einem Stahl oder einer Stahllegierung hergestellt, wobei bekannte, wirtschaftliche Herstellverfahren für geschlossene Hohlprofile, beispielsweise die Einrolltechnik oder Walzprofilen, verwendet werden können.

Zur Realisierung des modularen Aufbaus der Cockpitstruktur sind die Verbindungsmittel 3, 4 und 5 bei den unterschiedlichen Cockpitstrukturteilen, wie dem Cockpitträger 6 oder dem Abstützelement 2, einheitlich ausgebildet, so dass beliebige Kombinationen von unterschiedlichen Cockpitstrukturteilen ermöglicht werden.

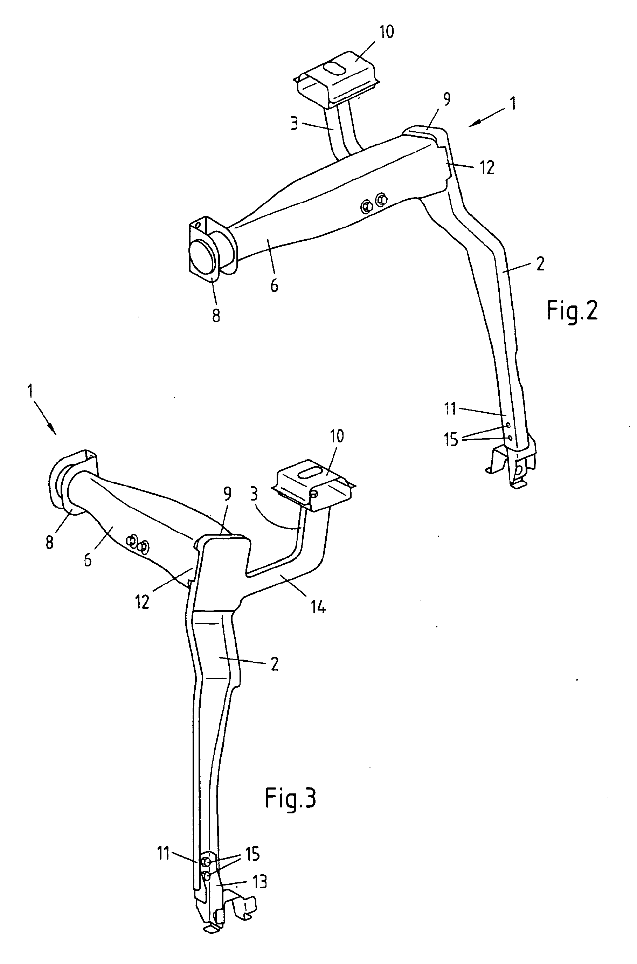

In den Fig. 2 und 3 ist ein zweites Ausführungsbeispiel einer erfindungsgemäßen Cockpitstruktur 1 in einer perspektivischen Ansicht dargestellt. Fig. 2 zeigt das zweite Ausführungsbeispiel perspektivisch von der Fahrerseite aus und Fig. 3 von der Beifahrerseite aus.

Im Unterschied zu dem in Fig. 1 dargestellten Ausführungsbeispiel verläuft der Verbindungsbereich 3 des Abstützelementes 2 von einem Verbindungsbereich 9 zur Verbindung mit dem Cockpitträger 6 in Form eines Arms zunächst horizontal, um anschließend vertikal in Richtung eines Windlaufs oder Querträgers 10 abzuknicken. Aufgebaut ist das Abstützelement 2 aus einem offenen Profil, welches durchgehend von dem Verbindungsbereich am Windlauf bzw. Querträger 10 bis zum Verbindungsbereich 11 am Bodenbereich oder Tunnelbereich der Fahrzeugkarosserie führt.

Beim zweiten Ausführungsbeispiel sind die Verbindungsmittel zur Verbindung.mit dem Cockpitträger 6 als Verbindungsbereich 9 in das Abstützelement 2 integriert. Der Cockpitträger 6 wird über Flansche 12, welche am Verbindungsbereich 9 des Abstützelementes 2 anliegen, am Abstützelement 2 befestigt und bildet damit eine Dreibein artige Struktur, welche eine hohe Aussteifung der Sicherheitszelle des Kraftfahrzeuges bewirkt. Am anderen Ende des Cockpitträgers 6, welcher beispielsweise aus einem "modular Tube" mit veränderlichem Querschnitt besteht, sind Verbindungsmittel 8 zur Verbindung der Cockpitstruktur mit der A-Säule eines Kraftfahrzeuges vorgesehen.

Sowohl in Fig. 2 als auch in Fig. 3 sind weiter Schrauben 15 als Verbindungsmittel zur Verbindung des Abstützelementes 2 beispielsweise mit dem Windlauf oder Querträger bzw. mit dem Boden- oder Tunnelbereich der Karosserie dargestellt. Das Anbindungselement 13 dient einerseits dazu eine flexible, Toleranzen ausgleichende Verbindung mit dem Boden- bzw. Tunnelbereich zu ermöglichen. Andererseits kann durch die Verwendung des Anbindungselementes 13 auf eine komplexe Formgebung des Endbereichs des Abstützelementes 2 verzichtet werden.

In Fig. 3 ist zusätzlich der Einsatz 14 zu erkennen, welcher rückseitig in das Abstützelement 2 zumindest im Verbindungsbereich 9 zum Cockpitträger 6 und im in Richtung Windlauf bzw. Querträger 10 als Arm verlaufenden Verbindungsbereich 3 des Abstützelementes 2 eingesetzt ist. Durch den Einsatz 14 erfährt der gesamte Bereich des Abstützelementes 2, in welchem dieser angeordnet ist, eine Aussteifung. Das Abstützelement 2 ist zur Optimierung an die Einbausituation des Cockpitträgers 6 im Fahrzeug komplex geformt, wobei die Form des offenen Profils des Abstützelementes 2 vorzugsweise durch Tiefziehen erhalten wird. Es sind aber auch andere Herstellverfahren denkbar.

## Patentansprüche

1. Cockpitstruktur eines Kraftfahrzeuges, welche im Bereich zwischen den A-Säulen der Karosserie eines Kraftfahrzeuges vorgesehen ist, umfassend mindestens einen Cockpitträger (6) und ein Abstützelement (2), wobei die Cockpitstruktur modular aufgebaut ist und unter Verwendung unterschiedlicher Cockpitstrukturteile, insbesondere unterschiedlicher Cockpitträger (6) und/oder Abstützelemente (2), an die jeweilige Karosserie anpassbar ist,
**dadurch gekennzeichnet, dass**
die Cockpitstruktur als Cockpitstrukturteile mindestens einen Cockpitträger (6) und genau ein Abstützelement (2) aufweist, das (2) aus Metall gebildet ist und Verbindungsmittel (3, 4, 5) zur Verbindung des Abstützelementes (2) mit dem Cockpitträger (6), einem Querträger unterhalb der Windschutzscheibe, insbesondere dem Windlauf, und einem Bodenbereich oder Tunnelbereich der Karosserie des Kraftfahrzeuges aufweist, so dass das Abstützelement (2) mit dem Cockpitträger (6), dem Querträger und dem Boden oder Tunnel der Karosserie des Kraftfahrzeuges über einen Kraft-, Form- und/oder Stoffschluss verbindbar ist.

2. Cockpitstruktur nach Anspruch 1,
**dadurch gekennzeichnet, dass**
die Cockpitstrukturteile angepasste Verbindungsmittel (3, 4, 5) aufweisen, welche eine Kombination unterschiedlicher Cockpitstrukturteile miteinander zulässt.

3. Cockpitstruktur nach Anspruch 1 oder 2,
**dadurch gekennzeichnet, dass**
die Cockpitstruktur (1) zumindest teilweise aus Metall und/oder Kunststoff aufgebaut ist.

4. Cockpitstruktur nach einem der Ansprüche 1 bis 3,
**dadurch gekennzeichnet, dass**
einseitig, insbesondere fahrerseitig, ein Cockpitträger (6) aus Metall, insbesondere Stahl oder einer Stahllegierung, vorgesehen ist.

5. Cockpitstruktur nach einem der Ansprüche 1 bis 4,
**dadurch gekennzeichnet, dass**
der Cockpitträger (6) mindestens ein geschlossenes Hohlprofil mit variablem Querschnitt aufweist.

6. Cockpitstruktur nach einem der Ansprüche 1 bis 5,
**dadurch gekennzeichnet, dass**
das Abstützelement (2) verbunden mit dem Cockpitträger (6) die Form eines Dreibeins aufweist.

7. Cockpitstruktur nach einem der Ansprüche 1 bis 6, **dadurch gekennzeichnet, dass** das Abstützelement (2) einen variablen Querschnitt aufweist.

8. Cockpitstruktur nach einem der Ansprüche 1 bis 7, **dadurch gekennzeichnet, dass** das Abstützelement (2) einteilig vom Querträger unterhalb der Windschutzscheibe, insbesondere vom Windlauf, bis zum Boden der Karosserie durchgehend ausgeführt ist.

9. Cockpitstruktur nach einem der Ansprüche 1 bis 8, **dadurch gekennzeichnet, dass** das Abstützelement einen Verbindungsbereich zur Verbindung des Abstützelementes mit dem Cockpitträger über Flansche aufweist, wobei dieser Verbindungsbereich zumindest parallele Kantenbereiche zur Aufnahme der Flansche des Cockpitträgers aufweist.

10. Cockpitstruktur nach einem der Ansprüche 1 bis 9, **dadurch gekennzeichnet, dass** das Abstützelement einen Verbindungsbereich zur Verbindung des Abstützelementes mit dem Windlauf und/oder einen anderen Querträger aufweist, welcher in Form eines Arms im Wesentlichen horizontal von dem Verbindungsbereich zur Verbindung mit dem Cockpitträger ausgehend beginnt und im Bereich der Verbindung an den Querträger oder Windlauf der Karosserie im Wesentlichen senkrecht endet.

11. Cockpitstruktur nach einem der Ansprüche 1 bis 10,
**dadurch gekennzeichnet, dass**
die Verbindungsbereiche des Abstützelementes zur Verbindung des Abstützelementes mit dem Cockpitträger und dem Windlauf und/oder Querträger über einen Einsatz, welcher an die Kontur als offenes Hohlprofil ausgebildeten Abstützelementes in diesen Bereichen angepasst ist, ausgesteift ist.

12. Cockpitstruktur nach Anspruch 11,
**dadurch gekennzeichnet, dass**
der Einsatz in eingebautem Zustand im Aufnahme- und Anbindungsbereich des Abstützelementes mit diesem zusammen ein teilweise geschlossenes Hohlprofil bildet.

13. Cockpitstruktur nach einem der Ansprüche 1 bis 12,
**dadurch gekennzeichnet, dass**
zur Verbindung des Abstützelementes mit dem Bodenbereich der Karosserie ein in das Abstützelement einlegbares, relativ zum Abstützelement und/oder relativ zum Bodenbereich verschiebbares Anbindungselement vorgesehen ist.

14. Cockpitstruktur nach einem der Ansprüche 1 bis 13,
**dadurch gekennzeichnet, dass**
das Abstützelement und/oder das in das Abstützelement einlegbare Anbindungselement Langlöcher aufweist.

## Claims

1. Cockpit structure of a motor vehicle, which is provided in the area between the A-columns of the body of a motor vehicle, comprising at least one cockpit carrier (6) and one support element (2), wherein the cockpit structure is of modular design and, with the use of different cockpit structure parts, in particular different cockpit carriers (6) and/or support elements (2), can be adapted to the individual body,
**characterized in that**
the cockpit structure has as cockpit structure parts at least one cockpit carrier (6) and precisely one support element (2), which is formed of metal and has connection means (3, 4, 5) for the connection of the support element (2) to the cockpit carrier (6), a transverse support member beneath the windscreen, in particular the cowl and a floor area or tunnel area of the body of the motor vehicle, such that the support element (2) can be connected to the cockpit carrier (6), the transverse support member and the floor or tunnel of the body of the motor vehicle, by means of a force closure, a form closure and/or a material closure.

2. Cockpit structure according to Claim 1, **characterized in that** the cockpit structure parts have adapted connection means (3, 4, 5), which allow for a combination of different cockpit structure parts with one another.

3. Cockpit structure according to Claims 1 or 2, **characterized in that** the cockpit structure (1) is constructed at least in part from metal and/or plastic.

4. Cockpit structure according to any one of Claims 1 to 3, **characterized in that** on one side, particularly on the driver's side, a cockpit carrier (6) made of metal, in particular steel or a steel alloy is provided.

5. Cockpit structure according to any one of Claims 1 to 4, **characterized in that** the cockpit carrier (6) has at least one closed hollow profile with variable cross-section.

6. Cockpit structure according to any one of Claims 1 to 5, **characterized in that** the support element (2) connected to the cockpit carrier (6) has the shape of a tripod.

7. Cockpit structure according to any one of Claims 1 to 6, **characterized in that** the support element (2) has a variable cross-section.

8. Cockpit structure according to any one of Claims 1 to 7, **characterized in that** the support element (2) is designed as one piece continuously from the transverse support member beneath the windscreen, in particular from the cowl, as far as to the floor of the body.

9. Cockpit structure according to any one of Claims 1 to 8, **characterized in that** the support element has a connection area for the connection of the support element to the cockpit carrier by means of flanges, wherein this connection area has at least parallel edge areas for the accommodation of the flanges of the cockpit carrier.

10. Cockpit structure according to any one of Claims 1 to 9, **characterized in that** the support element has a connection area for the connection of the support element to the cowl and/or another transverse support member, which in the form of an arm begins essentially horizontally from the connection area for the connection to the cockpit carrier and ends perpendicularly in the area of the connection to the transverse support member or the cowl of the body.

11. Cockpit structure according to any one of Claims 1 to 10, **characterized in that** the connection areas of the support element for the connection of the support element to the cockpit carrier and the cowl and/or the transverse support member are braced by means of an insert element, which is adapted in these areas to the contour of the support element designed as an open hollow profile.

12. Cockpit structure according to Claim 11, **characterized in that** the insert element in the installed state in the accommodation and connection area of the support element forms a partially closed hollow profile together with this support element.

13. Cockpit structure according to any one of Claims 1 to 12, **characterized in that**, for the connection of the support element to the floor area of the body, a connection element which can be inserted into the support element and can be displaced relative to the support element and/or relative to the floor area is provided.

14. Cockpit structure according to any one of Claims 1 to 13, **characterized in that** the support element and/or the connection element capable of being inserted into the support element have longitudinal holes.

## Revendications

1. Structure de panneau d'instrumentation d'un véhicule automobile, qui est prévu dans la zone comprise entre les montants avant de la carrosserie d'un véhicule automobile, comprenant au moins un support de panneau
d'instrumentation (6) et un élément d'appui (2), dans laquelle la structure de panneau d'instrumentation est construite de manière modulaire et est adaptable à la carrosserie respective en utilisant différentes pièces de structure de panneau d'instrumentation, en particulier différents supports de panneau d'instrumentation (6) et/ou différents éléments d'appui (2),
**caractérisée en ce que** la structure de panneau d'instrumentation comprend comme pièces de structure de panneau d'instrumentation au moins un support de panneau d'instrumentation (6) et exactement un élément d'appui (2), réalisé en métal et présente des moyens de raccordement (3, 4, 5) pour raccorder l'élément d'appui (2) au support de panneau d'instrumentation (6), à une traverse disposée en dessous du pare-brise, en particulier à l'auvent, et à une zone de plancher ou une zone de tunnel de la carrosserie du véhicule automobile de sorte que l'élément d'appui (2) soit raccordable au support de panneau d'instrumentation (6), à la traverse et au plancher ou au tunnel de la carrosserie du véhicule automobile par adhérence, complémentarité de forme et/ou assemblage matériel.

2. Structure de panneau d'instrumentation selon la revendication 1,
**caractérisée en ce que** les pièces de structure de panneau d'instrumentation comprennent des moyens de raccordement adaptés les uns aux autres (3, 4, 5) qui permettent de combiner différentes pièce de structure de panneau d'instrumentation.

3. Structure de panneau d'instrumentation selon la revendication 1 ou 2,
**caractérisée en ce que** la structure de panneau d'instrumentation (1) est formée au moins en partie de métal et/ou d'un matériau synthétique.

4. Structure de panneau d'instrumentation selon l'une quelconque des revendications 1 à 3,
**caractérisée en ce que**, d'un côté, en particulier du côté conducteur, il est prévu un support de panneau d'instrumentation (6) en métal, en particulier en acier ou en alliage d'acier.

5. Structure de panneau d'instrumentation selon l'une quelconque des revendications 1 à 4,
**caractérisée en ce que** le support de panneau d'instrumentation (6) comprend au moins un profilé creux fermé avec une section transversale variable.

6. Structure de panneau d'instrumentation selon l'une quelconque des revendications 1 à 5,
**caractérisée en ce que** l'élément d'appui (2) raccordé au support de panneau d'instrumentation (6) présente la forme d'un trépied.

7. Structure de panneau d'instrumentation selon l'une quelconque des revendications 1 à 6,
**caractérisée en ce que** l'élément d'appui (2) présente une section transversale variable.

8. Structure de panneau d'instrumentation selon l'une quelconque des revendications 1 à 7,
**caractérisée en ce que** l'élément d'appui (2) est réalisé en continu d'un seul tenant de la traverse située en dessous du pare-brise, en particulier de l'auvent, jusqu'au plancher de la carrosserie.

9. Structure de panneau d'instrumentation selon l'une quelconque des revendications 1 à 8,
**caractérisée en ce que** l'élément d'appui présente une zone de raccordement pour raccorder l'élément d'appui au support de panneau d'instrumentation via des flancs, la zone de raccordement présentant au moins des zones de bord parallèles adaptés pour la réception des flancs du support d'habitacle.

10. Structure de panneau d'instrumentation selon l'une quelconque des revendications 1 à 9,
**caractérisée en ce que** l'élément d'appui présente une zone de raccordement pour raccorder l'élément d'appui à l'auvent et/ou à une autre traverse, la zone de raccordement commençant sous la forme d'un bras sensiblement à l'horizontale à partir de la zone de raccordement pour le raccordement au support de panneau d'instrumentation et se terminant sensiblement à la verticale dans la zone de raccordement à la traverse ou à l'auvent de la carrosserie.

11. Structure de panneau d'instrumentation selon l'une quelconque des revendications 1 à 10,
**caractérisée en ce que** les zones de raccordement de l'élément d'appui pour raccorder l'élément d'appui au support de panneau d'instrumentation et à l'auvent et/ou à la traverse sont renforcées par un insert qui est adapté dans ces zones au contour de l'élément d'appui conformé en profilé creux ouvert.

12. Structure de panneau d'instrumentation selon la revendication 11,
**caractérisée en ce que** l'insert à l'état intégré dans la zone de réception et de liaison de l'élément d'appui forme conjointement avec celui-ci un profilé creux en partie fermé.

13. Structure de panneau d'instrumentation selon l'une quelconque des revendications 1 à 12,
**caractérisée en ce que**, pour raccorder l'élément d'appui à la zone de plancher de la carrosserie, il est prévu un élément de liaison insérable dans l'élément d'appui et déplaçable par rapport à l'élément d'appui et/ou par rapport à la zone de plancher.

14. Structure de panneau d'instrumentation selon l'une quelconque des revendications 1 à 13,
**caractérisée en ce que** l'élément d'appui et/ou l'élément de liaison insérable dans l'élément d'appui présente des trous oblongs.
